# EUROPEAN PATENT APPLICATION

(11) **EP 4 289 656 A1**
(43) Date of publication of application: **13.12.2023**
(21) Application number: 22177511.7
(22) Date of filing: 07.06.2022
(51) Int. Cl.: B60L 53/30, B60L 53/16, B60L 53/18

(54) **ELECTRIC VEHICLE CHARGER WITH MOVEABLE CHARGING CABLE TERMINAL**

(71) Applicant: GARO Aktiebolag, 335 25 Gnosjö (SE)
(72) Inventor: Johansson, Claes, 335 25 Gnosjö (SE)
(74) Representative: AWA Sweden AB

(57) **Abstract**

The present invention provides an electric vehicle charger (1) which comprises a support unit (3) configured to receive power supplied to the electric vehicle charger and a charging unit (2) configured to receive power via the support unit. The charging unit comprises a charging cable terminal (4). The position of the charging cable terminal on the charging unit can be changed by a user.

## Description

### Technical field

The disclosure relates to an electric vehicle charger and especially an electric vehicle charger with a movable charging cable terminal.

### Background

With an increased demand of electric vehicles, the need for electric vehicle chargers increases. Prior art inventions comprise electric vehicle chargers, which by means of electronic components enable electric vehicles to be charged from an electric power grid.

A large number of electric vehicle chargers, especially such that are maintained by electric vehicle pools, are placed on parking lots where the area needs to be utilized effectively. The cost of electric vehicle chargers is high and there is a lack of electronic components available.

There is therefore a need for more flexible solutions for electric vehicle chargers which allows a more efficient use of available components and installation space in a parking area.

### Summary

It is an object of the present invention to provide an improved solution that alleviates the drawbacks of present devices. Furthermore, it is an object to provide a flexible electric vehicle charger that provides effective use of components and space.

The invention is defined by the appended independent claim, with embodiments being set forth in the appended dependent claims, in the following description and in the drawings.

According to one aspect of the inventive concept there is provided an electric vehicle charger. The electric vehicle charger comprises a support unit configured to receive power supplied to the electric vehicle charger and a charging unit configured to receive power via the support unit. The charging unit comprises a charging cable terminal. The position of the charging cable terminal on the charging unit can be changed by a user.

For a user to be able to change the position of a charging cable terminal on a charging unit may enable charging from different positions on the charging unit. This may enable better utilization of space on a parking lot, where the electric vehicle charger may be arranged, since by changing between different positions, a larger area of a parking lot may be reached from the electric vehicle charger. Thereby, vehicles may be able to park from more spots.

Furthermore, the present invention may remove the need for a customer of electric vehicle chargers to specify the number of desired chargers of variants with the charging cable terminal arranged on specific positions on an electric vehicle charger. It may also decrease the need of hiring of electricians needed to install a new charger, which for prior art inventions may be required to enable charging on more spots of e.g. a parking lot. The electric vehicle charger of the present invention may decrease manufacturing costs compared to prior art inventions. It may also decrease the need for related authorities and firms to store electric vehicle chargers, since availability may not be required of electric vehicle chargers with charging cable terminals on specific positions.

The support unit may be a unit configured to be arranged on a wall, a pillar, a post or the like. The support unit may be configured to receive the power supply for the electric vehicle charger. The support unit may be configured to supply the power further to the charging unit.

The charging cable terminal may be either an outlet terminal for receiving an electric vehicle charging plug attached to a charging cable, or a directly mounted charging cable attached to an electric vehicle charging plug.

In one embodiment the charging cable terminal may be changeable between a position on the right side and a position on the left side of the charging unit.

There may, thereby, be no need for manufacturers to produce both electric vehicle chargers with charging cable terminals on the right side and on the left side, since the charging cable terminal may be changed between the right side and the left side of the electric vehicle charger. To be able to change charging position to either the left side or the right side of the charging unit may be beneficial to achieve a long reach of the electric vehicle charger and an improved flexibility at the installation.

In one embodiment the charging unit is configured to be disconnected from power supply when detached from the support unit.

This may enable the possibility for someone who is not electrician to change the position of the charging cable terminal on the charging unit. Further may decrease the risks equipped with handling the charging unit, and for example repairing it.

In one embodiment the charging unit may be detached from and attached to the support unit by a user. For a user to be able to detach and attach the charging unit, may further decrease the need of hiring of electricians for e.g. an electric vehicle pool. The need to cut off current within a grid comprising an electric vehicle charger may also be less frequent with the present invention. An electric vehicle pool owner or other customers of multiple electric vehicle chargers may, with the present invention, be able to let support units of said electric vehicle chargers be installed by an electrician and in case of an increased demand, order desired number of charging units of electric vehicle chargers, which may be connected to said support units without a need of hiring an electrician. This may be economically beneficial for the customer and especially in an embodiment, in which the cost of manufacturing a support unit may be lower than that of manufacturing a charging unit. Furthermore, if a charging unit is out of order a user may remove the charging unit from the support unit and let the charging unit be repaired. The user may also be able to store charging units and thereby replace a charging unit which is out of order, implying that vehicles may be charged without having to wait for reparation of the charging unit. Further, the orientation of the charging cable terminal on the charging unit may not need to be predetermined prior to attachment to the support unit.

In one embodiment the detachment of the charging unit from the support unit may enable the position of the charging cable terminal on the charging unit to be changed.

For the charging unit to be detached from the support unit during changing of position of the charging cable terminal on the charging unit, enables a safe changing of position of the charging cable terminal on the charging unit, without a risk of being exposed to a voltage from the power supply. This enables for a user which is not an electrician, to do this operation. Furthermore, the position of the charging cable terminal on the charging unit may also be changed at another location than where a support unit is arranged. The charging cable terminal may be prevented from being changed in position on the charging unit until the charging unit is detached from the support unit.

In one embodiment the charging cable terminal may be detached from and attached to the charging unit, by a user, to change its position on the charging unit. A charging cable terminal which is out of order may also be replaced by the user. The user may or may not be an electrician. This may further decrease the cost of handling the electric vehicle charger since costs of hiring an electrician for this purpose may be avoided. Furthermore, charging cable terminals may be stored and attached to a charging unit when needed.

In one embodiment, the charging unit may be configured to be attached to the support unit with a snap-fit function, by screwing means or by a form-fitted function, or a combination thereof.

The snap fit function may provide an easy attachment and removal of the charging unit from the support unit without a need of tools. Further this may enhance the possibility for one user to remove or attach the charging unit alone. The snap fit function may also be implemented so as when snap fit elements of the support unit and the charging unit attach to each other a sound is heard which may be when the support unit gets electrically connected to the charging unit. The alternative use of screwing means may be able to performed by one or two users to attach the charging unit to the support unit. The attachment may alternatively take place by a combination of above described attachment means.

In one embodiment the support unit and the charging unit may both comprise connection terminals by which the charging unit is electrically connected to the support unit when the charging unit is attached to the support unit.

The connection terminals may provide a stable connection for power transfer between the support unit and the charging unit. The connection terminal of the charging unit and the support unit may be oriented such that they connect to each other during attachment of the attachment means of the respective unit to one another. This may contribute to a convenient connection of the units to each other.

In one embodiment the charging unit may comprise at least one recess configured to receive the charging cable terminal. The recess may enhance the attachment and removal of a charging cable terminal. It may also provide a stable connection between a charging cable terminal and a charging unit and prevent glitches between the charging cable terminal and the charging unit.

In one embodiment the charging cable terminal is slidably detachable from the at least one recess on the charging unit. The charging cable terminal being slidably detachable may provide a convenient detachment and attachment of a charging cable terminal in relation to a charging unit.

In one embodiment the charging unit may comprise a front side and a back side, wherein the back side may be configured to face the support unit when the charging unit is arranged thereto, and wherein the at least one recess on the charging unit may comprise an opening towards the back side for slidable detachment of the charging cable terminal from the charging unit.

The back side may have a shape that at least partly matches the shape of the support unit in order to provide a stable attachment of the charging unit to the support unit. The opening of the charging unit being directed towards its back side may prevent the charging cable terminal to be removed from the charging unit when the charging unit is attached to the support unit. The charging cable terminal may be prevented from being detached from the charging unit from the front side of the charging unit.

In one embodiment the charging cable terminal may be detachable from the at least one recess only when the charging unit is detached from the support unit. Thereby the user may not be exposed to electrically current when detaching or attaching the charging cable terminal. The detachment of the charging unit from the support unit may provide the charging unit to be powerless. In one embodiment, the charging unit may be disconnected from the power supply when detached from the support unit.

In one embodiment, the charging unit may comprise two recesses, arranged on different sides of the charging unit, and the charging cable terminal may be configured to be arranged in either of the two recesses. The two recesses may, for instance, be arranged on opposite sides of the charging units, such as on a left side and a right side. All recesses may be arranged with an opening towards a back side of the charging unit, such that removal of a charging cable terminal, and/or a cover member, from a recess is prevented when the charging unit is arranged onto the support unit.

In one embodiment, the charging unit may further comprise a cover member configured to be arranged in a recess on the charging unit in which a charging cable terminal is not arranged. When moving the charging cable terminal from a first recess to a second, a cover member may be moved from the second to the first recess.

In one embodiment, the charging unit may comprise electronic components enabling a vehicle to be charged, which may decrease the number of electronic components needed in an electric vehicle charging system, since if one charger is not used for a longer time the charging unit can be moved and be used at a spot where the demand is larger. The utilization of electronic components may thereby be higher than for prior art inventions.

In some embodiments, the support unit comprises an RFID tag. The RFID tag may provide, upon reading it, an identification of the support unit. A charging unit to be arranged on the support unit, may comprise an RFID reader, configured to read an RFID tag arranged on the support unit. The charging unit may be configured based on the reading of the RFID tag on the support unit. The configuration of the charging unit may involve adapting the charging unit to the installation of the support unit in terms of e.g. current level supplied to the support unit, and/or cable parameters. The information for the configuration may be stored in the charging unit itself and selected based on the read identification of the support unit from the RFID tag. Alternatively, the information for the configuration may be stored on a server in which the charging unit may be communicatively connected to. The charging unit may be communicatively connected to the server through a network via wired or wireless communication. The server may have stored information regarding the identity of the support unit, in connection with information of the installation of the support unit, such as current level supplied to the support unit and cable parameters.

When the charging unit has read the RFID tag of the support unit and retrieved the identification of the support unit, it may request from the server the installation information for the support unit for configuration of the charging unit. As an example, when installed, the support unit may be supplied with 16A current, and provided with an identification SU01. In the server, the identification SU01 may be stored with the information of 16A current supply level. Such information may be supplied to the server by an installer of the support unit. When the charging unit is attached to the support unit, the charging unit reads the RFID tag providing the identification SU01. The charging unit may then request information for configuration from the server based on the read identification SU01. The server may respond with the information of 16A current level. The charging unit may then be configured for supply of 16A current. The control of the charging of an electric vehicle by the electric vehicle charger may thereby be performed by the charging unit with the 16A configuration.

The RFID reader on the charging unit may be arranged at a backside of the charging unit, the side facing the support unit when attached thereto, such that the RFID reader is arranged towards the RFID tag on the support unit.

The communication between the charging unit and the server may further provide information regarding identification of the charging unit, such that information of the charging unit being attached to the support unit may be stored on the server. The server may store information connecting a specific charging unit to a specific support unit. Such information may be used for e.g. load balancing in an installation system comprising a plurality of electric vehicle chargers. The charging unit may further communicate to the server information on the configuration of the charging cable terminal, such as in which position the charging cable terminal is arranged. The charging unit may be configured to detect at which position the charging cable terminal is arranged, and/or detect when the position of the charging cable terminal is changed. Such information may be stored in the server.

The electric vehicle charger may be part of a system of a plurality of electric vehicle chargers. An owner of the system may control the information stored on the server for the electric vehicle chargers, the support units, the charging units etc.

In some embodiments, a charging unit may comprise an additional RFID reader, a user RFID tag reader. The user RFID tag reader may be arranged at a front side of the charging unit, a side facing away from the support unit, and accessible to a user. The user RFID tag reader may be configured to read a user RFID tag that a user may use to activate charging of an electric vehicle by the electric vehicle charger. The charging unit may be configured to only enable charging when a user RFID tag of a user with granted access to the electric vehicle charger has been read. The charging unit may be configured to either request information whether to enable charging based on a read user RFID tag from the server, by sending the read information in the user RFID tag, or to store information on whether to enable charging following information from reading a specific user RFID tag. Such stored information may previously have been retrieved from the server. The system owner may control the information stored on the server and/or communicated to the charging unit on access to charging following reading of user RFID tags. The information provided by a user RFID tag may be a unique identification of the user RFID tag.

### Brief description of drawings

Fig. 1 shows a perspective view of an electric vehicle charger according to an embodiment of the invention.
Fig. 2 shows a perspective view of an electric vehicle charger according to an embodiment of the invention.
Fig. 3 shows a perspective view of an electric vehicle charger according to an embodiment of the invention.
Fig. 4 shows a perspective view of an electric vehicle charger according to an embodiment of the invention, in which a charging unit is detached from a support unit of the electric vehicle charger.
Fig. 5 shows a perspective view of a charging unit with an attached charging cable terminal, according to an embodiment of the invention.
Fig. 6 shows a perspective view of a charging unit with a detached charging cable terminal according to an embodiment of the invention.

### Detailed description

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

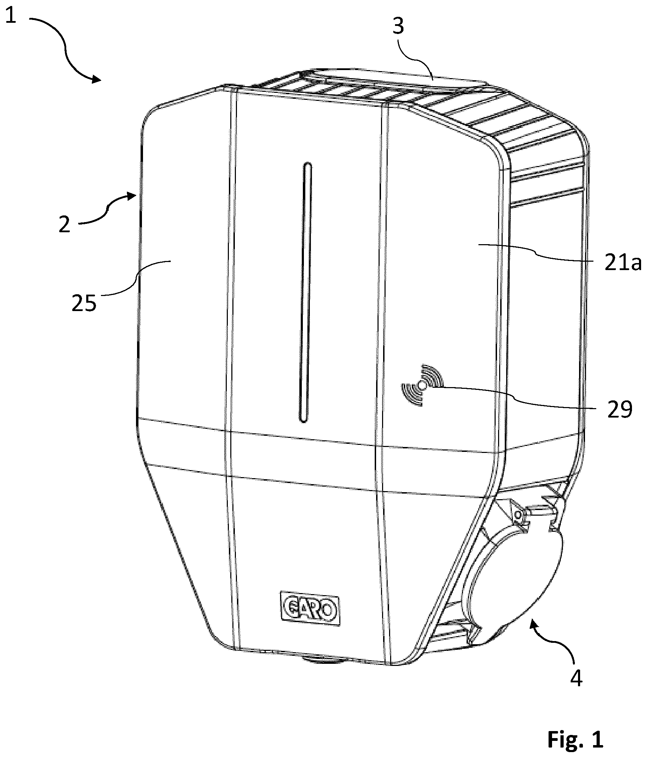

An electric vehicle charger 1 is seen in Figure 1. The electric vehicle charger 1 comprises a support unit 3 which may be mounted onto a wall or a post. The support unit 3 may preferably be mounted by an electrician. The electric vehicle charger 1 further comprises a charging unit 2 which is seen attached to the support unit 3. A charging cable terminal 4 is attached to the charging unit 2. An electric vehicle may be plugged into the charging cable terminal 4 in order to charge the electric vehicle. The charging unit 2 has a front side cover 25 on the front side 21a which protects electronical components within the charging unit 2. In the illustrated embodiment the charging cable terminal 4 is configured to receive a charging cable plug connected to a charging cable, to be plugged into an electric vehicle for charging.

Figure 1 further illustrates the charging unit 2 comprising a user RFID tag reader 29 configured to read a user RFID tag that a user may use to active charging of an electric vehicle. The charging unit 2 may, following reading of a user RFID tag, retrieve information on whether to enable charging based on the reading of the user RFID tag. Such information may be stored in the charging unit, or retrieved from a server storing such information.

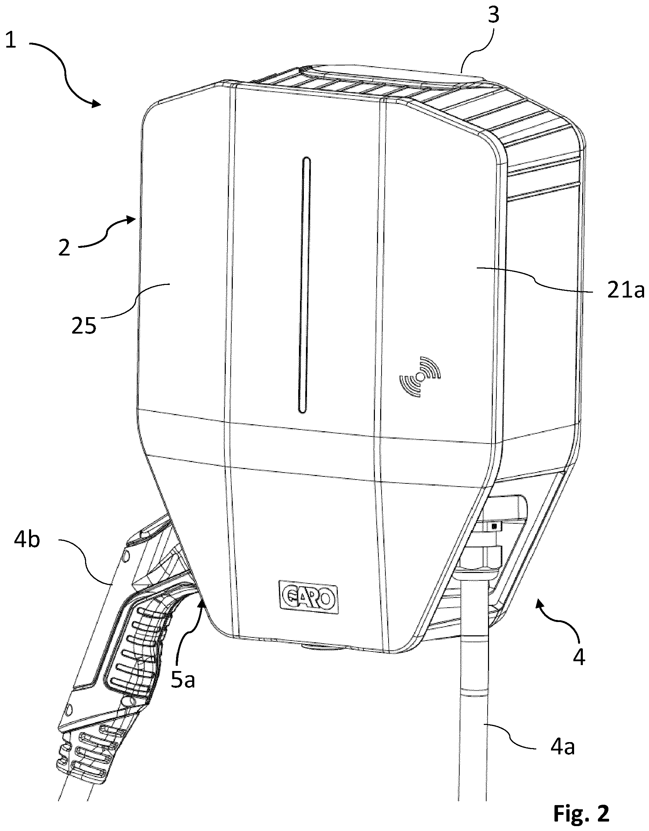

Figure 2 illustrates an embodiment wherein the charging cable terminal 4 instead is provided as a directly attached charging cable 4a, which charging cable 4a is configured to be plugged into an electric vehicle for charging. The embodiment in Figure 2 further illustrates the electric vehicle charger 1 to comprise a charging plug holder 5a in which a charging plug 4b attached to the charging cable 4a may be held when not in use for charging.

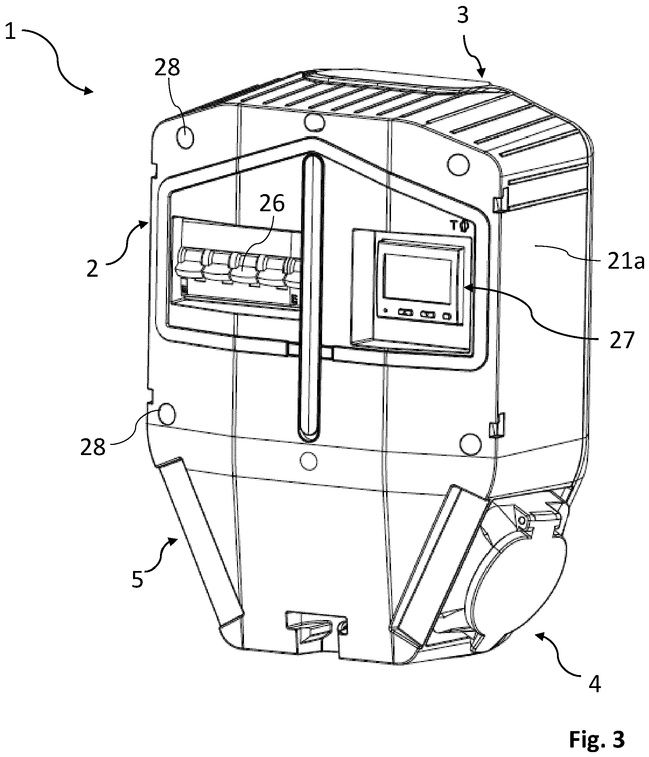

In Figure 3 the electric vehicle charger 1 is illustrated without front side cover in an embodiment in which the charging unit 2 comprises a display 27, which may show e.g. a charging rate or power consumption, during charging of an electric vehicle. Fuses 26, which may be used to secure the charging and power supply, are also seen. A front side cover for the embodiment illustrated in Figure 3 may comprise a transparent window to make the display 27 visible through the front side cover.

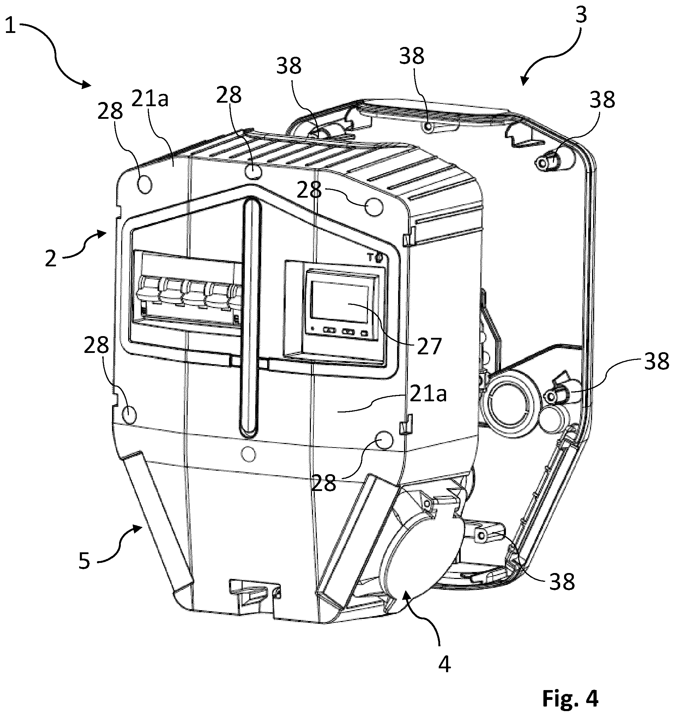

In Figure 4 the charging unit 2 is detached from the support unit 3. The support unit 3 has attachment means 38 and the charging unit 2 has corresponding attachment means 28. The attachment means 28, 38 may be a snap fit function. Alternatively the attachment means 28, 38 may be screwing means, a form-fitted function or a combination of the mentioned attachment means.

The charging unit 2 may be attached to and detached from the support unit 3 by a user, which does not have to be an electrician. Detachment of the charging unit 2 may be performed by releasing the attachment means 28, 38, and then pulling the charging unit 2 from the support unit 3.

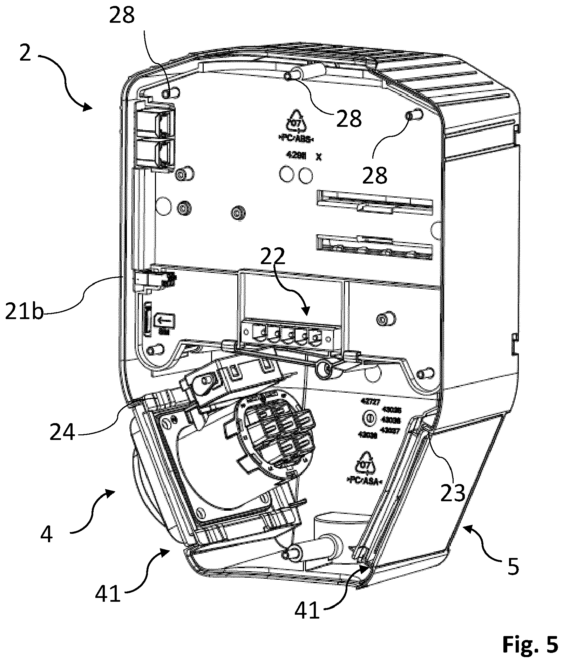

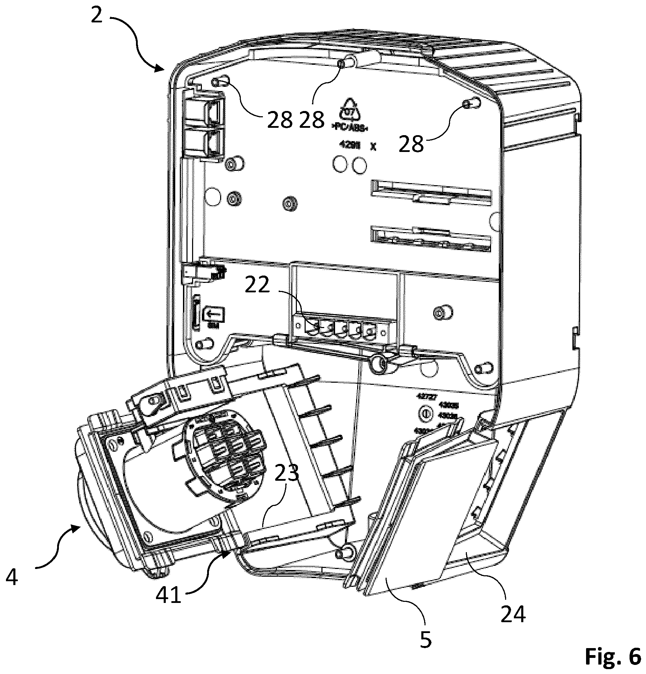

In Figures 5 and 6 the charging unit 2 is illustrated detached from the support unit 3 from the backside 21b, which is the side configured to face the support unit 3. The charging unit 2 has a connection terminal 22 which is configured to, during use, be connected to a corresponding connection terminal of the support unit 3. The connection terminals 22 may be oriented such that they connect when respective attachment means 28, 38 of the support unit 3 and the charging unit 2 are attached to each other, or otherwise when the charging unit 2 is attached to the support unit 3.

In the embodiment illustrated in Figure 5, the charging cable terminal 4 is attached to the charging unit 2. The charging cable terminal 4 may be attached or detached when the charging unit 2 is detached from the support unit 3. After detaching the charging unit 2 from the support unit 3, the position of the charging cable terminal 4 may be changed from the backside of the charging unit. Attachment and detachment takes place through engagement between the charging cable terminal 4 and recesses 24, 23 of the charging unit by moving the charging cable terminal 4 along the recesses 23, 24 in a slidable manner towards an opening 41. Since the opening 41 is towards the backside 21b of the charging unit 2, i.e. the side that faces the support unit 3 when the charging unit 2 is attached to the support unit 3, detachment and attachment of the charging cable terminal 4 may not take place when the charging unit 2 is attached to the support unit 3. When the charging cable terminal 4 is detached from the charging unit 2 it may be replaced by a cover member 5 which may be attached or detached by engagement with said recesses 23, 24.

Figure 6 illustrates an embodiment in which the charging cable terminal 4 and the cover member 5 are detached from the charging unit 2. From this position the charging cable terminal 4 and the cover member 5 may be attached to the charging unit 2 by movement along the recesses 23, 24. Both the charging cable terminal 4 and the cover member 5 have shapes which matches the recesses 24, 25 for the attachment and detachment. The position of the charging cable terminal 4 on the charging unit 2 may be changed by detaching the charging cable terminal 4 from one recess 23 of the charging unit and attaching it to another recess 24. In the illustrated embodiments the charging unit comprises two recesses 23, 24, one on the left side and one on the right side of the charging unit 2 but other embodiments may also be possible. What is said above for the cover member 5 may be equally applicable to a charging plug holder 5a as illustrated in Figure 2. The charging plug holder 5a may have the same functionality, and be movable correspondingly, as the cover member 5.

The charging cable terminal 4 may be electrically coupled to the charging unit 2 via cables (not shown) which may extend from a back side of the charging cable terminal 3 to the charging unit 2. When moving the charging cable terminal 4 from one side to another (i.e. from one recess 23 to another 24), no cable detachment or attachment between the charging cable terminal 4 and the charging unit 2 is necessary. The charging cable terminal 4 may be rotated from the position in recess 23 to the position in recess 24, thereby maintaining such cables being arranged towards a center of the charging unit 2.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. An electric vehicle charger (1) comprising
- a support unit (2) configured receive power supplied to the electric vehicle charger (1),
- a charging unit configured to receive power via the support unit (2) and comprising a charging cable terminal (4) for an electric vehicle charging cable,
- wherein the position of the charging cable terminal (4) on the charging unit (2) can be changed by a user.

2. The electric vehicle charger (1) according to claim 1, wherein the charging cable terminal (4) can be changed between a position on the right side and a position on the left side of the charging unit (2).

3. The electric vehicle charger (1) according to claim 1 or 2, wherein the charging unit (2) can be detached from and attached to the support unit (2) by a user.

4. The electric vehicle charger (1) according to claim 3, wherein detachment of the charging unit (2) from the support unit (2) enables the position of the charging cable terminal (4) on the charging unit (2) to be changed.

5. The electric vehicle charger (1) according to any of the preceding claims, wherein the charging cable terminal (4) can be detached from and attached to the charging unit (2) by a user to change its position on the charging unit (2).

6. The electric vehicle charger (1) according to any of the preceding claims, wherein the charging unit (2) is configured to be attached to the support unit (2) with a snap-fit function, by screwing means, or by a form-fitted function, or a combination thereof.

7. The electric vehicle charger (1) according to any of the preceding claims, wherein the support unit (2) and the charging unit (2) both comprise connection terminals (22) by which the charging unit (2) is electrically connected to the support unit (2) when the charging unit (2) is attached to the support unit (2).

8. The electric vehicle charger (1) according to any of the preceding claims, wherein the charging unit (2) comprises at least one recess configured to receive the charging cable terminal (4).

9. The electric vehicle charger (1) according to claim 8, wherein the charging cable terminal (4) is slidably detachable from the at least one recess on the charging unit (2).

10. The electric vehicle charger (1) according to any one of claims 8-9, wherein the charging unit (2) comprises a front side (21a) and a back side (21b), wherein the back side (21b) is configured to face the support unit (2) when the charging unit (2) is arranged thereto, and wherein the at least one recess (23,24) on the charging unit (2) comprises an opening (41) towards the back side (21b) for slidable detachment of the charging cable terminal (4) from the charging unit (2).

11. The electric vehicle charger (1) according to any one of claims 8-10, wherein the charging cable terminal (4) is detachable from the at least one recess (23,24) only when the charging unit (2) is detached from the support unit (2).

12. The electric vehicle charger (1) according to any one of claims 8-11, wherein the charging unit (2) comprises two recesses (23,24), arranged on different sides of the charging unit (2), and wherein the charging cable terminal (4) is configured to be arranged in either of the two recesses.

13. The electric vehicle charger (1) according to any one of claims 8-12, wherein the charging unit (2) further comprises a cove member (5) configured to be arranged in a recess on the charging unit (2) in which a charging cable terminal (4) is not arranged.

14. The electric vehicle charger (1) according to any of the preceding claims, wherein the charging unit (2) is disconnected from the power supply when detached from the support unit (2).
